# EUROPÄISCHE PATENTANMELDUNG

(11) **EP 1 043 516 A2**
(43) Veröffentlichungstag der Anmeldung: **11.10.2000**
(21) Anmeldenummer: 00106160.5
(22) Anmeldetag: 21.03.2000
(51) Int. Cl.: F16F 9/54, B60G 13/00, B60G 15/00, B60G 7/00

(54) **Radaufhängung**

(30) Priorität: 09.04.1999 DE 19916093; 28.04.1999 DE 19919279
(71) Anmelder: Bayerische Motoren Werke Aktiengesellschaft, 80809 München (DE)
(72) Erfinder: Niklas, Johann, 85778 Haimhausen (DE); Boedrich, Harald, 80993 München (DE); Krüger, Andy, 39444 Hecklingen (DE)

(57) **Zusammenfassung**

Eine Radaufhängung eines Kraftfahrzeugs mit einem Drehschwingungsdämpfer 1, der einen Rotor 10 und einen Stator 11 aufweist, sowie mit einem radführenden Lenker 2, wobei der Drehschwingungsdämpfer 1 vom radführenden Lenker 2 über ein drehstarres und winkelbewegliches Verbindungselement 3, welches mit dem Rotor 10 verbunden ist, angesteuert wird. Alternativ hierzu kann die Verbindung zwischen dem Lenker 2 und dem Rotor 10 auch form-, stoff- oder kraftschlüssig sein, wobei der Stator 11 über eine drehstarre jedoch winkelbewegliche Abstützung am Fahrzeugaufbau gelagert ist.

## Beschreibung

Die Erfindung betrifft eine Radaufhängung nach dem Oberbegriff des Patentanspruches 1.

Eine derartige aus der DE 197 00 422 A1 bekannte Radaufhängung weist einen Drehdämpfer mit Rotor und Stator auf Der Drehdämpfer wird von einem radführenden Lenker angesteuert. Hierzu wird ein zusätzlicher Hebel zur Betätigung des Rotors, welcher im fahrzeugkarosseriefesten Stator angeordnet ist, benötigt. Der zusätzliche Hebel erfordert je nach Achsprinzip zusätzlichen Bauraum und hebt damit zumindest teilweise die Bauraumeinsparung auf, welche durch die Verwendung eines Drehdämpfers gewonnen wird. Außerdem wird durch den zusätzlichen Anlenkhebel die Freigängigkeitsauslegung der radführenden Lenker beim Durchfedern beeinträchtigt.

Ferner ist aus der DE 40 15 777 C2 eine Radaufhängung mit einem Drehdämpfer bekannt, bei welchem die Welle des Drehdämpfers mit einem feststehenden Flügel an der Fahrzeugkarosserie festgelegt ist, während das Gehäuse durch den radführenden Lenker geschwenkt wird. Hierbei wird zwar eine direkte Integration des Drehdämpfers in den radführenden Lenker erreicht, jedoch wird die elastokinematische Auslegung beeinflußt und eine akustische Entkopplung der Radaufhängung erschwert. Rotor- und Statorachse müssen stets identisch sein, um eine Abdichtung des Flügels gegenüber dem Gehäuse zu erzielen. Der Lenker darf sich daher nur in einer Ebene bewegen. Aus der Achskinematik ergibt sich jedoch im allgemeinen über den Radhub eine räumliche Bewegung des Lenkers, die im aufbauseitigen Lenkerlager kardanische Winkel beinhaltet. Um diesem Erfordernis Rechnung zu tragen, müßte eine aufwendige Lagerung vorgesehen werden.

Aufgabe der Erfindung ist es, eine Radaufhängung der eingangs genannten Art zu schaffen, bei welcher der geringe durch den Einsatz der Drehdämpfers erzielte Bauraumbedarf, insbesondere die geringe Bauhöhe, mit verringertem Anlenk- und Lageraufwand beibehalten wird.

Diese Aufgabe wird erfindungsgemäß durch die kennzeichnenden Merkmale des Patentanspruches 1 gelöst.

Bei der Erfindung wird der Drehschwingungsdämpfer von einem radführenden Lenker über ein drehstarres mit dem Rotor verbundenes Verbindungselement, welches in seiner Längsausdehnung winkelbeweglich, insbesondere biegeweich ist, angesteuert. Alternativ hierzu kann gemäß der Erfindung der Lenker über ein dreh- und achsstarres Verbindungselement mit dem Rotor verbunden sein, wobei der Stator drehstarr und winkelbeweglich am Fahrzeugaufbau gelagert ist. Für das Verbindungselement bzw. die drehstarre und winkelbewegliche Lagerung eignet sich insbesondere eine Metallbalg-Kupplung (Wellrohr). Eine derartige Kupplung besitzt eine geringe Massenträgheit und erlaubt die erforderliche Beweglichkeit in den kardanischen Winkeln. Die Verbindung kann auch mit anderen drehstarren und spielfreien aber biegeweichen Kupplungen bewerkstelligt werden. Beispielsweise eignen sich Membran- bzw. Lamellenkupplungen, auf dem Oldham-Prinzip basierende Ausführungsformen oder eine Kardanwelle mit Schiebestück für den Längenausgleich. In bevorzugter Weise kommen solche Kupplungen zum Einsatz, welche eine möglichst geringe Körperschallübertragung haben.

Der radführende Lenker ist in bevorzugter Weise in einem elastischen Lager insbesondere Gummilager am Fahrzeugaufbau um eine Lagerachse schwenkbar gelagert. Ein durch den Lenker um die Lagerachse drehbares Lagerteil kann mit dem drehstarren und winkelbeweglichen Verbindungselement verbunden sein. Die Verbindung zwischen dem Lagerteil und dem Verbindungselement kann form-, kraft- oder stoffschlüssig sein.

Bei Ausbildung des elastischen Lagers insbesondere als hülsenförmiges Gummilager kann eine Außenbuchse des Gummilagers mit dem Verbindungselement verbunden sein. Das Gummilager kann hierzu aus der Außenbuchse, einer Innenbuchse und einem dazwischen angeordneten Gummielement bestehen. Es ist jedoch auch möglich, das elastische Lager aus zwei konzentrischen hülsenförmigen Gummilagern zu bilden, wobei ein gemeinsamer Zwischenring vorgesehen ist, der zwischen den beiden Gummielementen der Gummilager liegt und mit dem Verbindungselement verbunden ist.

Das Verbindungselement ist in bevorzugter Weise im wesentlichen rohrförmig ausgebildet, wodurch eine geringe Massenträgheit erreicht wird.

Der Stator des Drehschwingungsdämpfers kann mit dem Fahrzeugaufbau insbesondere über einen Achsträger oder mit der Karosserie fest verbunden sein. Es ist jedoch auch möglich, den Stator des Drehschwingungsdämpfers zwar drehstarr jedoch winkelbeweglich am Fahrzeugaufbau abzustützen. Es werden hierdurch kleine Winkelbewegungen um den kinematischen Lagermittelpunkt ermöglicht, da der Drehdämpfer in die Lagerung des radführenden Lenkers einbezogen ist.

Im Vergleich zu herkömmlichen Schwingungsdämpfern der Kolben-Zylinder-Bauart erreicht man einen geringen Bauraumbedarf, insbesondere eine geringe Bauhöhe durch die liegende Anordnung des Drehdämpfers. Die äußeren Abmessungen des Drehdämpfers sind ferner unabhängig von der Radstellung und dem Federweg. Hieraus ergeben sich Vorteile an den Vorderachsen des Kraftfahrzeugs, insbesondere bei der Gestaltung der Haubenlinie für die Designgestaltung. An den Hinterachsen des Kraftfahrzeugs ergeben sich Vorteile bei der Gestaltung des Kofferraums durch eine vergrößerte Durchladebreite, da Dämpferdome entfallen. Zusätzliche Lenker zur Ansteuerung des Rotationsdämpfers sind nicht erforderlich. Hieraus ergibt sich eine erhebliche Gewichtseinsparung.

Anhand der Figuren wird an Ausführungsbeispielen die Erfindung noch näher erläutert

Es zeigt:
- Fig. 1: ein erstes Ausführungsbeispiel im Längsschnitt;
- Fig. 2: das erste Ausführungsbeispiel in perspektivischer Darstellung;
- Fig. 3: ein zweites Ausführungsbeispiel im Längsschnitt;
- Fig. 4: das zweite Ausführungsbeispiel in perspektivischer Darstellung;
- Fig. 5: ein drittes Ausführungsbeispiel im Längsschnitt;
- Fig. 6: das dritte Ausführungsbeispiel in perspektivischer Darstellung;
- Fig. 7: ein viertes Ausführungsbeispiel im Längsschnitt;
- Fig. 8: das vierte Ausführungsbeispiel in perspektivischer Darstellung;
- Fig. 9: ein fünftes Ausführungsbeispiel im Längsschnitt und
- Fig. 10: das fünfte Ausführungsbeispiel in perspektivischer Darstellung.

In den Ausführungsbeispielen wird ein Drehschwingungsdämpfer 1, welcher über einen Achsträger 23 am Fahrzeugaufbau gelagert ist, von einem radführenden Lenker 2 über ein drehstarres und winkelbewegliches Verbindungselement 3 angesteuert. Hierzu ist der radführende Lenker 2 lagerseitig über das Verbindungselement 3 mit einem Rotor 10, der um eine Rotationsachse 24 drehbar in einem Stator 11 gelagert ist, verbunden. Zur Lagerung des radführenden Lenkers 2 und des Drehschwingungsdämpfers 1 sind in den Ausführungsbeispielen Lagerböcke 20, 21 und 22 vorgesehen. Diese sind am Achsträger 23, welcher mit dem Fahrzeugaufbau gekoppelt ist, befestigt.

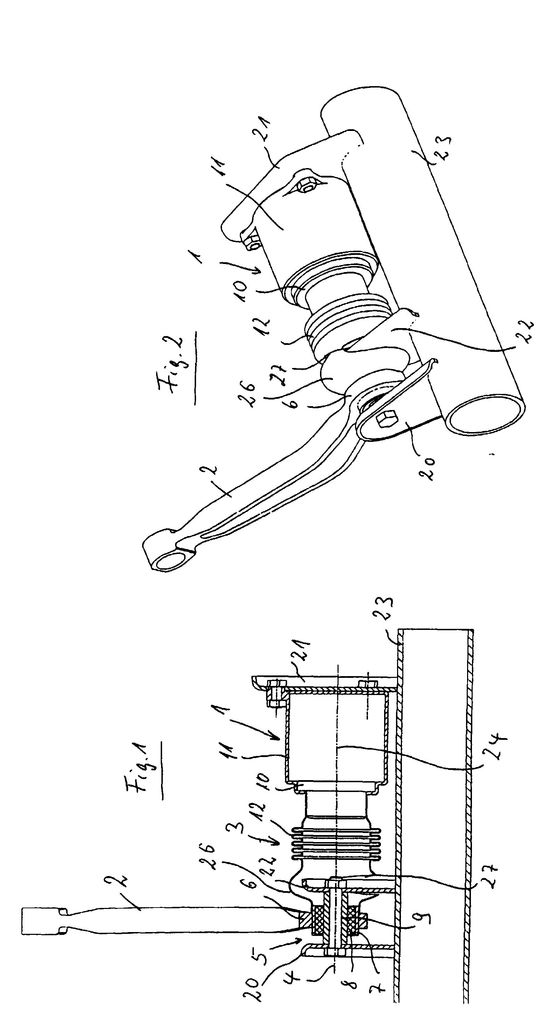

In den Ausführungsbeispielen der Figuren 1 bis 4 und 7 bis 10 ist das Verbindungselement 3 als Metallbalgkupplung 12 (Wellrohr) ausgebildet. Hierdurch erreicht man eine im wesentliche rohrförmige Ausbildung des Verbindungselementes 3 mit geringem Massenträgheitsmoment.

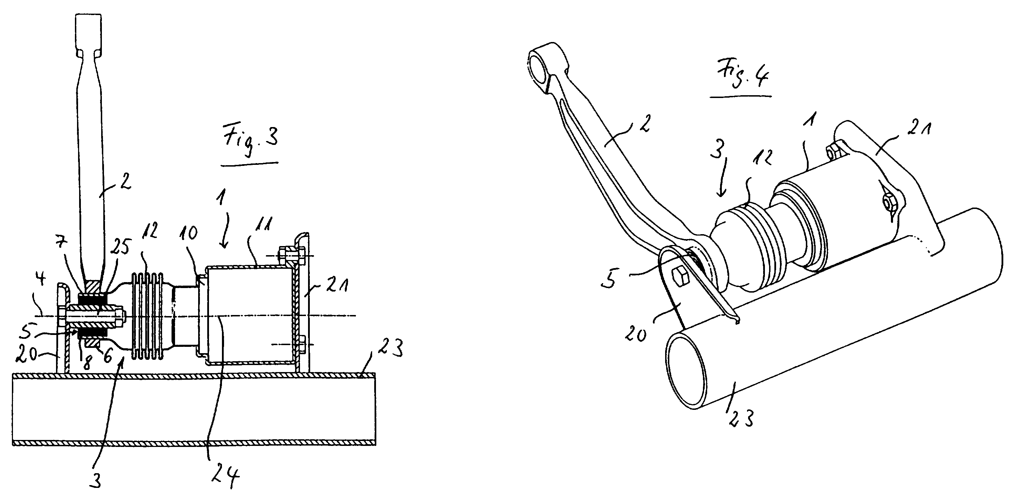

Der radführende Lenker 2 ist über ein elastisches Lager 5, welches bei den Ausführungsformen der Fig. 1 bis 6 als einfaches Gummilager ausgebildet ist, am Achsträger 23 gelagert. Beim Ausführungsbeispiel der Fig. 7 und 8 ist der Lenker 2 über zwei konzentrische Gummilager am Achsträger 23, wie im einzelnen noch erläutert wird, gelagert.

Bei den Ausführungsbeispielen der Fig. 1 bis 6 besteht das als hülsenförmiges Gummilager ausgebildete elastische Lager 5 aus einer Außenbuchse 7, einer Innenbuchse 9 und einem dazwischen angeordneten Gummielement 8. Die Innenbuche 9 ist über einen Lagerzapfen 25 am Lagerbock 20 (Ausführungsformen der Fig. 3 bis 8) allein und bei der Ausführungsformen der Fig. 1 und 2 an dem weiteren Lagerbock 22 festgelegt.

Beim ersten Ausführungsbeispiel der Fig. 1 und 2 befinden sich die beiden Lagerböcke 20 und 22 zu beiden Seiten eines Lagerteils 6 am drehbaren Lenker 2, wobei das drehbare Lagerteil 6 das Gummilager 5 umfaßt. Mit dem Lagerteil 6 ist drehfest die Außenbuchse 7 des Gummilagers 5 verbunden. Hierdurch wird eine Schwenklagerung des radführenden Lenkers 2 um eine Lagerachse 4, welche vom Lagerzapfen 25 gebildet wird, erreicht. Der Lenker 2 kann beim Ein- bzw. Ausfedern entsprechende Drehwinkelbewegungen um die Lagerachse 4 ausführen. Überlagert sich infolge der Achskinematik der Drehbewegung bzgl. des Gummilagers noch eine kardanische Bewegung, so kann diese durch das Gummilager 5 aufgenommen werden.

Mit dem drehbaren Lagerteil 6 und insbesondere mit der Außenbuchse 7 ist form-, kraft- oder stoffschlüssig ein Zwischenrohr 26 verbunden. Das Zwischenrohr 26 besitzt eine dem Drehwinkel des Lenkers 2 beim Ein- bzw. Ausfedern entsprechende Aussparung 27, in welcher der Lagerbock 22 angeordnet ist. Das Zwischenrohr 26 verbindet den Lenker 2 drehstarr mit der Metallbalgkupplung 12 des Verbindungselementes 3. Hierdurch wird der Lagerbock 22 im Kraftfluß zwischen dem Lenker 2 und dem Rotor 10 des Drehschwingungsdämpfers 1 umgangen. Der Rotor 10 wird durch die Metallbalgkupplung 12 (Wellrohr) betätigt. Der Stator 11 (Gehäuse) des Drehdämpfers ist fest mit der Karosserie bzw. dem Achsträger 23 über den Lagerbock 21 verbunden.

Das erste Ausführungsbeispiel der Fig. 1 und 2 kann ohne wesentliche konstruktive Änderungen an einer bestehenden Lagerbock-Einheit eingesetzt werden. Die Steifigkeit des elastischen Lagers bzw. Gummilagers 5 kann in Abhängigkeit von der Biegesteifigkeit des Wellrohres der Metallbalgkupplung 12 angepaßt werden. Bei der Dimensionierung des Lenkers 2 müssen die aus den Dämpfungskräften resultierenden zusätzlichen Belastungen berücksichtigt werden.

Beim zweiten Ausführungsbeispiel der Fig. 3 und 4 besitzt der radführende Lenker 2 am Lagebock 20 eine "fliegende Lagerung". Die Innenbuchse des elastischen Lagers bzw. Gummilagers 5 ist am Lagerbock 20 über den Lagerzapfen 25 festgelegt. An der dem Lagerbock 20 gegenüberliegenden Seite des Lenkers 2 ist die Außenbuchse 7 des Gummilagers 5 kraft-, form- oder stoffschlüssig mit dem drehstarren und biegeweichen Verbindungselement, welches ebenfalls als Metallbalgkupplung 12 ausgebildet ist, verbunden. Die Kupplung, welche das Verbindungselement 3 bildet, ist mit dem Rotor 10 des Drehschwingungsdämpfers 1 verbunden. Hierdurch erreicht man eine drehstarre und biegeweiche Kupplung zwischen dem Lenker 2 und dem Rotor 10 des Drehschwingungsdämpfers 1. Der Stator 11 (Gehäuse des Drehschwingungsdämpfers) ist wie beim ersten Ausführungsbeispiel fest mit der Karosserie bzw. dem Achsträger 23 über den Lagerbock 21 verbunden.

Aufgrund der fliegenden Lagerung des Lenkers 2 am Lagerbock 20 entfällt bei diesem Ausführungsbeispiel der Lagerbock 22. Hierdurch kann die Baulänge verringert werden. Außerdem erhöht sich die Torsionsteifigkeit des drehmomentübertragenden Verbindungselementes 3. Die Steifigkeit des Gummilagers 5 kann in Abhängigkeit von der Biegesteifigkeit der verwendeten Kupplung angepaßt werden. Man erreicht daher in dem im wesentlichen koaxialen Verlauf von Lagerachse 4 und Rotationsachse 24 die elastokinematisch erforderliche Winkelbeweglichkeit durch entsprechende Biegeweichheit.

Beim dritten Ausführungsbeispiel der Fig. 5 und 6 sind der Lenker 2 und der Drehschwingungsdämpfer 1, wie beim zweiten Ausführungsbeispiel, an den beiden Lagerböcken 20, 21 gelagert. Bei dieser Ausführungsform wird der Drehschwingungsdämpfer 1 in die Lagerung des Lenkers 2 miteinbezogen. Am Lagerbock 20 ist hierzu das elastische Lager bzw. Gummilager 5 vorgesehen, welches den gleichen Aufbau besitzt wie im Ausführungsbeispiel der Fig. 3 und 4. Die Außenbuchse 7 ist jedoch in ihrer axialen Ausdehnung verlängert und mit dem Rotor 10 form- oder kraftschlüssig gekoppelt. Die Innenbuchse 9 ist, wie beim Ausführungsbeispiel der Fig. 3 und 4, über den Lagerzapfen 25 am Lagerbock 20 fixiert. Der Lenker 2 ist über sein Lagerteil 6 form- und kraftschlüssig mit der Verlängerung der Außenbuchse 7, welche auf dem Rotor 10 sitzt, verbunden. Hierdurch ergibt sich eine starre Koppelung zwischen dem Lenker 2 und dem Rotor 10 des Drehschwingungsdämpfers 1.

Bei dieser Ausführungsform übernimmt die axiale Verlängerung der Außenbuchse 7, welche zwischen dem Lagerteil 6 und dem Rotor 10 starr angeordnet ist, die Funktion des drehmomentübertragenden Verbindungselementes 3. Die zweite Funktion besteht darin, daß die Verbindung zum Gummilager 5 für die Lagerung hergestellt ist.

Um die kardanische Beweglichkeit des Lenkers über den Radhub weiterhin zu gewährleisten, ist der Stator 11 (Gehäuse) des Drehschwingungsdämpfers 1 drehstarr jedoch winkelbeweglich bzgl. der Lagerachse 24 am Achsträger 23 bzw. der Karosserie gelagert. Die Winkelbeweglichkeit des Stators 11 ist derart, daß Bewegungen um einen kinematischen Lagermittelpunkt, d.h. bzgl. des radseitigen kinematischen Lagerpunktes, möglich sind. Beim dargestellten Ausführungsbeispiel wird dies durch eine drehstarre jedoch winkelbewegliche insbesondere biegeweiche Abstützung 13, welche ebenfalls als Metallbalgkupplung mit einem Wellrohr 28 ausgebildet sein kann, erreicht. Zusätzlich kann ein zweites Gummilager 14 zur Abstützung der Massenkräfte des Dämpfers vorgesehen sein. Das Gummilager 14 ist über einen Lagerzapfen 29 am Lagerbock 21 abgestützt. Der Lagerzapfen 29 kann mit dem Lagerbock 21 so verschraubt werden, daß er gleichzeitig die axiale Festlegung des Wellrohres 28 übernimmt. Die azimutale Festlegung des Wellrohres 28 kann über einen formschlüssig in den Lagerbock 21 ragenden Ansatz des Wellrohres 28 erreicht werden.

Bei der dritten Ausführungsform können der Lenker 2 und der Drehschwingungsdämpfer 1 als Vormontageeinheit ausgebildet werden. Bei Verwendung eines Achsträgers 23 kann diese Vormontageeinheit direkt mit diesem verschraubt werden. Man enthält dann - falls die übrigen Achskomponenten ebenso vormontiert werden können - die gesamte Achse als Montagemodul. Bei Fortfall eines Achsträgers kann die Vormontageeinheit mit den übrigen radführenden Bauteilen direkt mit der Karosserie verbunden werden.

Beim vierten Ausführungsbeispiel der Fig. 7 und 8 sind zwei konzentrisch angeordnete Gummilager mit einem gemeinsamen Zwischenring 17 vorgesehen. Dasinnenliegende Gummilager ist mit seinem Innenring durch den Lagerzapfen 25 am Lagerbock 20 festgelegt. Zwischen dem Zwischenring 17 und dem Innenring 19 befindet sich ein Gummielement 18. Der Lenker 2 sitzt mit seinem Lagerteil 6 form-, stoff- oder kraftschlüssig auf dem Zwischenring 17, der das hülsenförmige Gummielement 18 umfaßt. Auf einer axialen Verlängerung des Zwischenringes 17 befindet sich ein zweites Gummielement 16, welches von einem Außenring 15 hülsenförmig umfaßt wird. Der Außenring 15 ist mit dem Lagerbock 22 drehfest verbunden. Idealerweise übernimmt der Lagerbock 22 die Funktion des Außenrings 15.

Der Zwischenring 17 ist drehfest über das Verbindungselement 3, welches ebenfalls, wie bei den Ausführungsformen der Fig. 1 bis 4 als Metallbalgkupplung 12 ausgebildet ist, drehstarr und biegeweich mit dem Rotor 10 des Drehschwingungsdämpfers 1 verbunden. Der Stator 11 bzw. das Gehäuse des Drehschwingungsdämpfers 1 ist fest mit dem Lagerbock 21 verbunden. Die Lagerböcke 20, 21 und 22 sind am Achsträger 23 bzw. der Karosserie befestigt.

Es ist auch möglich, die Gummilager beidseits des Lenkers 2 mit gemeinsamem Innenring zu positionieren. Der dann wegen der Montierbarkeit mittig aufgeweitete Innenring ist mit dem Lenker 2 fest verbunden. Die Außenringe werden dann karosserie- oder achsträgerseitig festgelegt. Gleichzeitig dient der Innenring über ein drehstarres und biegeweiches Verbindungselement zur Ansteuerung des Rotors 10 des Drehschwingungsdämpfers 1.

Der Zwischenring 17 kann auch zwischen dem Stator 11 und dem Achsträger 23 bzw. der Karosserie verbaut werden. Hierbei wird allerdings die Belastung des Zwischenrings mit dem Eigengewicht des Drehschwingungsdämpfers in Kauf genommen.

Beim vierten Ausführungsbeispiel ergibt sich eine sehr einfach aufgebaute Anlenkung des Drehschwingungsdämpfers 1. Man erreicht eine biegesteife und kurzbauende Ausführung des Lagerbocks mit zwei Stegflächen. Insbesondere bei der Zusammenfassung von Lagerinnenring bzw. -zwischenring und Verbindungselement bzw. Kupplung kann die Anzahl der Bauteile sowie die Baulänge sehr gering gehalten werden. Ferner ergeben sich geringe kardanische Belastungen des innenliegenden Lagers.

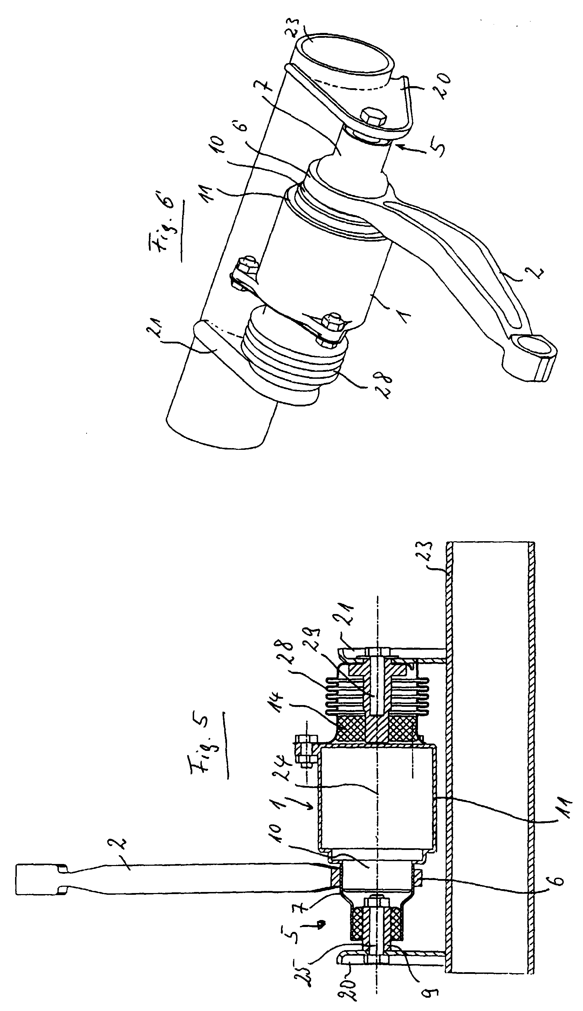

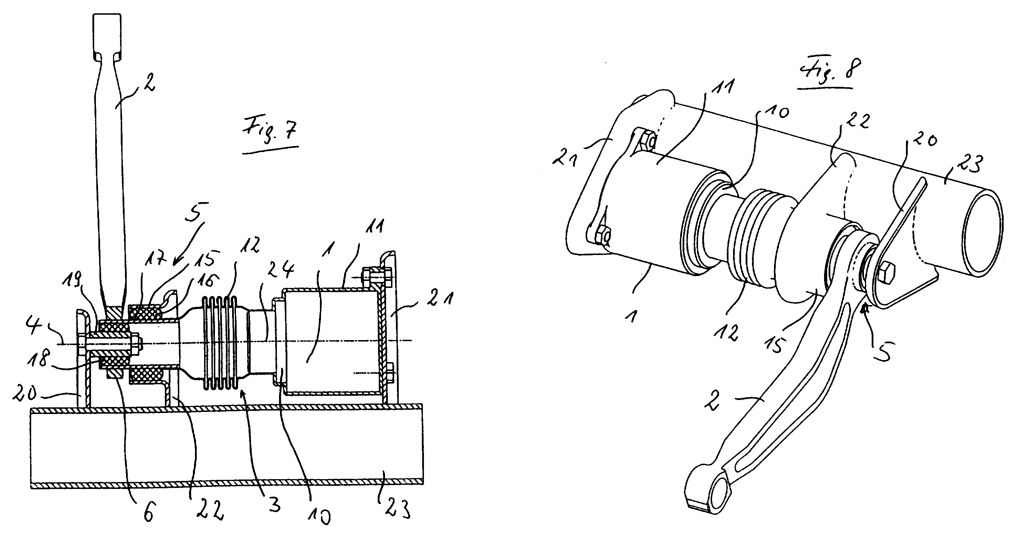

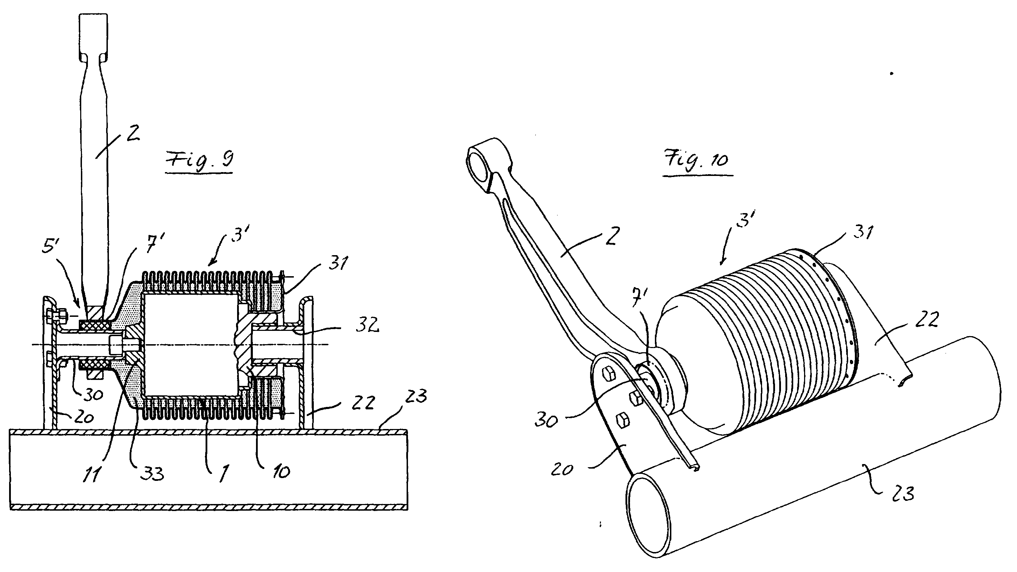

In den Fig. 9 und 10 ist ein weiteres Ausführungsbeispiel dargestellt, bei dem der Drehschwingungsdämpfer 1 im inneren eines drehstarren, winkelbeweglichen Verbindungselementes 3' angeordnet ist. Wie man erkennt, ist die Außenbuchse 7' des elastischen Lagers 5' einstückig mit dem Verbindungselement 3' ausgebildet. Das drehstarre, winkelbewegliche Verbindungselement 3' hat einen größeren Außendurchmesser, damit es den Drehschwingungsdämpfer 1 mit einem bestimmten radialen Abstand umgeben kann.

Die Innenhülse 30 des elastischen Lagers 5' ist an einem Ende mit einem aufbaufesten Lagerbock 20 verbunden und stützt am anderen Ende den Stator 11 des Drehschwingungsdämpfers 1 ab. An dem Verbindungselement 3' ist an dessen dem Lager 5' abgewandten Ende ein im wesentlichen ringförmiges Deckblech 31 befestigt. Dieses Deckblech ist andererseits radial innen mit dem Rotor 10 des Drehschwingungsdämpfer 1 fest verbunden. Das Deckblech 31 ist erforderlich, um den Drehschwingungsdämpfer 1 innerhalb des drehstarren, winkelbeweglichen Verbindungselementes 3' montieren zu können.

Der Rotor 10 ist auf einer Lagerhülse 32 drehbeweglich abgestützt, die an einem weiteren Lagerbock 22 vorgesehen ist. Zwischen beiden ist eine Gleitlagerbuchse vorgesehen, die fest an der Lagerhülse 32 angebracht ist. Es ergibt sich eine zuverlässige Abstützung des relativ schweren Drehschwingungsdämpfers 1, was bei den hohen im Fahrbetrieb auftretenden dynamischen Belastungen von Bedeutung ist.

Der Hohlraum zwischen dem Drehschwingungsdämpfer 1 und dem drehstarren, winkelbeweglichen Verbindungselement 3' ist mit einem Zwischenmedium 33 hoher Wärmeleitfähigkeit ausgefüllt. Dieses Zwischenmedium kann gelartig, pastös oder flüssig sein. Bei dem Ausführungsbeispiel nach den Fig. 9 und 10 ist der Drehschwingungsdämpfer 1 nicht direkt von Luft umströmt. Über das Zwischenmedium 33 kann dennoch eine gute Wärmeabfuhr nach außen erreicht werden, wozu auch die größere Oberfläche des Verbindungselementes 3' bei diesem Ausführungsbeispiel vorteilhaft ist. Es versteht sich, daß sowohl im Bereich des Lagers 5' als auch im Bereich der Lagerhülse 32 sowie in der Befestigungszone zwischen Verbindungselement 3' und Deckblech 31 besondere Abdicht-Maßnahmen getroffen werden müssen.

Das Ausführungsbeispiel nach den Fig. 9 und 10 erfordert einen verglichen mit den übrigen Ausführungsbeispielen deutlich kürzeren Bauraum in Axialrichtung. Durch die gute Wärmeabfuhr kann auch die Baulänge des Drehschwingungsdämpfers 1 kürzer gewählt werden. Die größeren Wellrohrbereiche des Verbindungselementes 3' bedingen eine geringere Verformung der einzelnen Wellrohrabschnitte zu einem kleineren Biegemoment, so daß auch die Beanspruchung der Rotorwelle auf Biegung und rückwirkend auf das Lager 5' geringer wird. Durch die gewählte Lagerung des Drehschwingungsdämpfers 1 wird die elastokinematische Auslegung des Lagers 5' kaum beeinflußt.

Bei allen Ausführungsbeispielen können Rotor und Stator des Drehschwingungsdämpfers gegeneinander ausgetauscht werden, falls diese Anordnung, z.B. hinsichtlich Package, Vorteile ergibt.

## Patentansprüche

1. Radaufhängung eines Kraftfahrzeuges mit einem Rotor und Stator aufweisenden Drehschwingungsdämpfer und radführenden Lenkern,
dadurch gekennzeichnet, daß der Drehschwingungsdämpfer (1) von einem radführenden Lenker (2) über ein drehstarres winkelbewegliches mit dem Rotor (10) verbundenes Verbindungselement (3) bei fahrzeugseitig festgelegtem Stator (11) oder über ein dreh- und achsstarres mit dem Rotor (10) verbundenes Verbindungselement (3) bei drehstarr und winkelbeweglich gegenüber dem Fahrzeugaufbau gelagertem Stator (11) angesteuert ist.

2. Radaufhängung nach Anspruch 1,
dadurch gekennzeichnet, daß der Lenker (2) in einem elastischen Lager (5) am Fahrzeugaufbau um eine Lagerachse (4) schwenkbar gelagert ist und ein durch den Lenker (2) um die Lagerachse (4) drehbares Lagerteil (6) mit dem Verbindungselement (3) verbunden ist.

3. Radaufhängung nach Anspruch 2,
dadurch gekennzeichnet, daß das Lagerteil (6) form-, kraft- oder stoffschlüssig mit dem Verbindungselement (3) verbunden ist.

4. Radaufhängung nach Anspruch 2 oder 3,
dadurch gekennzeichnet, daß das elastische Lager (5) als hülsenförmiges Gummilager (7 - 9) ausgebildet ist und eine Außenbuchse (7) des Gummilagers mit dem Verbindungselement (3) verbunden ist.

5. Radaufhängung nach Anspruch 2 oder 3,
dadurch gekennzeichnet, daß das elastische Lager (5) aus zwei konzentrischen hülsenförmigen Gummilagern (15 - 19) gebildet ist, die einen gemeinsamen Zwischenring (17) aufweisen, der mit dem Verbindungselement (3) verbunden ist.

6. Radaufhängung nach einem der Ansprüche 1 bis 5,
dadurch gekennzeichnet, daß das Verbindungselement (3) und/oder die Abstützung (13) des Stators am Fahrzeugaufbau drehstarr und in der axialen Ausdehnung winkelbeweglich ausgebildet ist bzw. sind.

7. Radaufhängung nach einem der Ansprüche 1 bis 6,
dadurch gekennzeichnet, daß das Verbindungselement (3) und/oder die Abstützung (13) des Stators (11) am Fahrzeugaufbau als drehsteife und biegeweiche Kupplung ausgebildet ist bzw. sind.

8. Radaufhängung nach einem der Ansprüche 1 bis 7,
dadurch gekennzeichnet, daß das Verbindungselement (3) und/oder die Abstützung (13) des Stators (11) am Fahrzeugaufbau im wesentlichen rohrförmig ausgebildet ist bzw. sind.

9. Radaufhängung nach einem der Ansprüche 1 bis 8,
dadurch gekennzeichnet, daß das Verbindungselement (3) und/oder die Abstützung (13) des Stators (11) am Fahrzeugaufbau eine Metallbalgkupplung aufweist.

10. Radaufhängung nach einem der Ansprüche 1 bis 9,
dadurch gekennzeichnet, daß der Stator (11) des Drehschwingungsdämpfers (1) mit dem Fahrzeugaufbau fest verbunden ist.

11. Radaufhängung nach einem der Ansprüche 1 bis 10,
dadurch gekennzeichnet, daß der Drehschwingungsdämpfer (1) und der Lenker (2) über ein gemeinsames Lager am Fahrzeugaufbau abgestützt sind.

12. Radaufhängung nach einem der Ansprüche 1 bis 11,
dadurch gekennzeichnet, daß der Stator (11) über die drehstarr und biegeweich ausgebildete Abstützung (13) am Fahrzeugaufbau abgestützt ist und der Lenker (2) kraft- und formschlüssig mit dem Rotor (10) verbunden ist.

13. Radaufhängung nach Anspruch 11 oder 12,
dadurch gekennzeichnet, daß der Stator (11) zusätzlich mittels eines Gummilagers (14) am Fahrzeugaufbau abgestützt ist.

14. Radaufhängung nach einem der Ansprüche 1 bis 13,
dadurch gekennzeichnet, daß der Lenker (2) und der Drehschwingungsdämpfer mit dem Drehmoment übertragenden Verbindungselement (3) als Vormontageeinheit ausgebildet sind.

15. Radaufhängung nach Anspruch 1,
dadurch gekennzeichnet, daß der Drehschwingungsdämpfer (1) im Inneren des drehstarren, winkelbeweglichen Verbindungselementes (3) angeordnet ist.

16. Radaufhängung nach Anspruch 4 und 15,
dadurch gekennzeichnet, daß die Außenbuchse (7') des elastischen Lagers (5') einstückig mit dem Verbindungselement (3') ausgebildet ist.

17. Radaufhängung nach Anspruch 16,
dadurch gekennzeichnet, daß die Innenhülse (30) des elastischen Lagers (5') an einem Ende mit einem aufbaufesten Lagerbock (20) verbunden ist und am anderen Ende den Stator (11) des Drehschwingungsdämpfers (1) abstützt.

18. Radaufhängung nach Anspruch 16,
dadurch gekennzeichnet, daß an dem dem Lager (5')abgewandten Ende des Verbindungselementes (3') ein im wesentlichen ringförmiges Deckblech (31) befestigt ist, das radial innen mit dem Rotor (10) des Drehschwingungsdämpfers (1) fest verbunden ist.

19. Radaufhängung nach Anspruch 18,
dadurch gekennzeichnet, daß der Rotor (10) auf einer Lagerhülse (32) drehbeweglich abgestützt ist, die an einem weiteren Lagerbock (22) vorgesehen ist.

20. Radaufhängung nach Anspruch 15,
dadurch gekennzeichnet, daß der Hohlraum zwischen dem Drehschwingungsdämpfer (1) und dem Verbindungselement (3') mit einem gelartigen, pastösen oder flüssigen Zwischenmedium (33) hoher Wärmeleitfähigkeit ausgefüllt ist.
